# EUROPEAN PATENT APPLICATION

(11) **EP 2 581 503 A2**
(43) Date of publication of application: **17.04.2013**
(21) Application number: 12188271.6
(22) Date of filing: 12.10.2012
(51) Int. Cl.: E02F 9/08, B62D 25/20, B62D 33/02

(54) **Upper slewing body and operating machine having the same**

(30) Priority: 14.10.2011 JP 2011227224
(71) Applicant: Kobelco Construction Machinery Co., Ltd., Hiroshima 731-5161 (JP)
(72) Inventor: Ushiroguchi, Asuka, Hiroshima-shi, Hiroshima 731-5161 (JP)
(74) Representative: TBK

(57) **Abstract**

An upper frame has a bottom plate, a pair of vertical plates that are provided to stand on the bottom plate so as to face each other in a right-left direction, and a left side frame configuring a part of a rim part of the upper frame. An attachment is supported on a support parts provided in front of the slewing bearing in vertical plates. A left vertical plate has a rear curved part, behind the support part, which is curved forming a convex shape directed toward an opposite side of a right vertical plate in a planar view. The upper slewing body further has a first coupling member for coupling the left side frame and the left vertical plate to each other so as to prevent the left vertical plate from being deformed in a direction in which the rear curved part approaches the right vertical plate.

## Description

### Background of the Invention

### Field of the Invention

The present invention relates to an upper frame of an operating machine including a hydraulic shovel and crane.

### Description of the Background Art

An operating machine provided with a lower propelling body and an upper slewing body mounted on the lower propelling body has conventionally been known. The upper slewing body has an upper frame supported on the lower propelling body so as to be able to slew, as well as an attachment, cab, machinery room, counterweight and the like that are provided on the upper frame.

The attachment includes a boom and arm that are attached to the upper frame in a displaceable manner. The boom and the arm are driven by a hydraulic actuator. The attachment is installed at a front portion of the upper frame. On the other hand, at a rear portion of the upper frame, a heavy counterweight is installed in order to keep the balance in a front-back direction by weighting against the load applied to the front part of the upper frame by the attachment.

Specifically, the upper frame has a bottom plate supported on the lower propelling body and a pair of vertical plates provided to stand on the bottom plate in a manner as to face each other in a right-left direction and extend in the front-back direction. The pair of vertical plates functions as a strength member for steadily supporting the attachment and the counterweight. Specifically, the attachment is attached to a front part of each vertical plate and the counterweight is attached to a rear part of each vertical plate.

When the distances between a center of slewing and the vertical plates are different from each other, the center of gravity of the counterweight leans toward one of the vertical plates. Consequently, the counterweight vibrates during traveling or an excavation operation of the operating machine, causing a large vibration in the right-left direction of the counterweight, which is called "rolling vibration."

Japanese Patent Application Publication No. 2006-328764 (referred to as "Patent Document" hereinafter), for example, discloses a construction machinery for reducing the rolling vibration of a counterweight. More specifically, right and left vertical plates that are bent at the middle are provided in the operating machine described in Patent Document, in a manner that the interval between the rear sections of the right and left vertical plates is wider than the interval between the front sections of the right and left vertical plates.

Fig. 9 is a schematic view in which an upper frame (a slewing frame) 101 described in Patent Document is viewed from diagonally underneath. The upper frame has an attaching part 102 provided on each vertical plate and for allowing an attachment to attach, and a slewing bearing 103 for connecting the upper frame 101 and a lower propelling body, not shown, to each other in a turnable manner. The attaching part 102 is located on the inside of the slewing bearing 103 in a planar view. Therefore, even when the load applied to the attaching part 102 changes significantly as a result of an operation of the attachment, the lower propelling body can reliably receive this load. As a result, the attachment can be supported steadily.

Sometimes, however, the attaching part of the attachment is provided outside the slewing bearing in a manner as to protrude forward from the upper frame. In this case, a front part of the upper frame swings easily vertically around the slewing bearing as the load applied to the attaching part fluctuates, making the support of the attachment unstable.

Especially when the vertical plates are curved significantly in the right-left direction in the upper frame described in Patent Document, the vertical plates are easily deformed so as to expand the curved sections thereof. This eventually causes the upper frame to swing easily vertically as described above, making the support of the attachment more unstable.

### Summary of the Invention

An object of the present invention is to provide an upper slewing body capable of steadily supporting an attachment, and an operating machine having this upper slewing body.

In order to achieve the object described above, the present invention provides an upper slewing body that is provided on a lower propelling body of an operating machine so as to be able to slew, the upper slewing body comprising: an upper frame that has a bottom plate that is supported on the lower propelling body via a slewing bearing so as to be able to slew, first and second vertical plates that are provided to stand on the bottom plate so as to face each other in a right-left direction and to extend in a front-back direction, and a side frame fixed to the bottom plate and configuring a part of a rim part of the upper frame, the vertical plates each having a support part located in front of the slewing bearing; and an attachment that is supported on the support parts of the vertical plates so as to be able to rise and fall, wherein the first vertical plate has a curved part, behind the support part, which is curved to form a convex shape directed toward an opposite side of the second vertical plate in a planar view, and the upper slewing body further comprises a first coupling member for coupling the side frame and the first vertical plate to each other so as to prevent the first vertical plate from being deformed in a direction in which the curved part approaches the second vertical plate.

The present invention also provides an operating machine that has the upper slewing body described above and a lower propelling body that supports the upper slewing body via the slewing bearing so as to allow the upper slewing body to slew.

According to the present invention, the attachment can be supported steadily by effectively preventing deformation of the vertical plates, even when the support part of the attachment is located in front of the slewing bearing and the vertical plates are curved.

### Brief Description of the Drawings

Fig. 1 is a side view of a hydraulic shovel according to an embodiment of the present invention.
Fig. 2 is a schematic plan view of an upper frame of the hydraulic shovel shown in Fig. 1.
Fig. 3 is a schematic perspective view of the upper frame shown in Fig. 2.
Fig. 4 is a cross-sectional diagram taken along IV-IV in Fig. 2.
Fig. 5 is a schematic perspective view in which the upper frame shown in Fig. 2 is viewed from below.
Fig. 6 is a schematic side view of the hydraulic shovel, for illustrating how a support part swings.
Fig. 7 is a plan view for explaining functions of a first coupling member.
Fig. 8 is a schematic view showing a modification of the present invention.

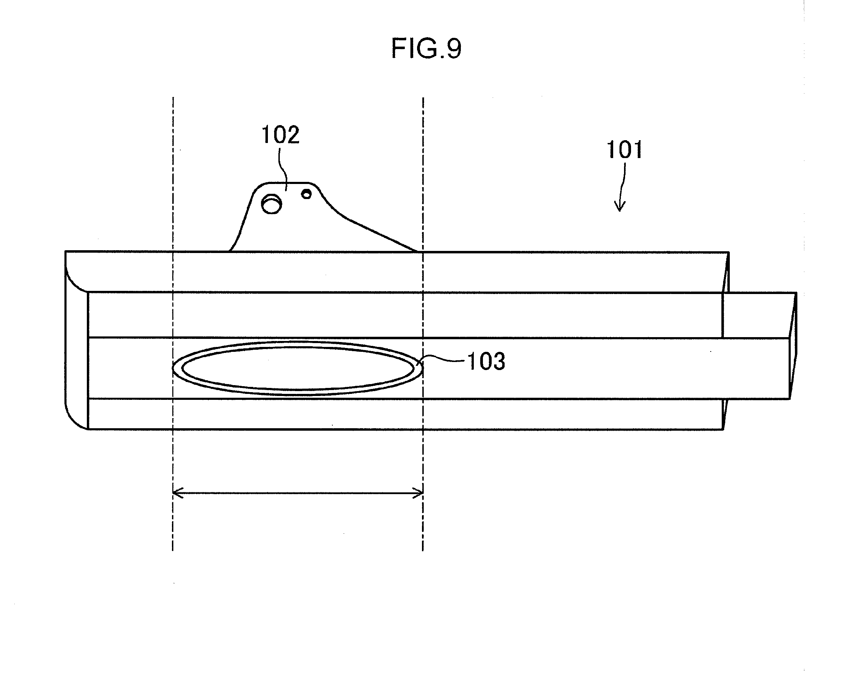

Fig. 9 is a schematic perspective view showing an upper frame of a conventional operating machine.

### Detailed Description of the Preferred Embodiments of the Invention

An embodiment of the present invention is described hereinafter with reference to the accompanying drawings. The following embodiment is merely an example embodying the present invention and is not to limit the technical scope of the present invention.

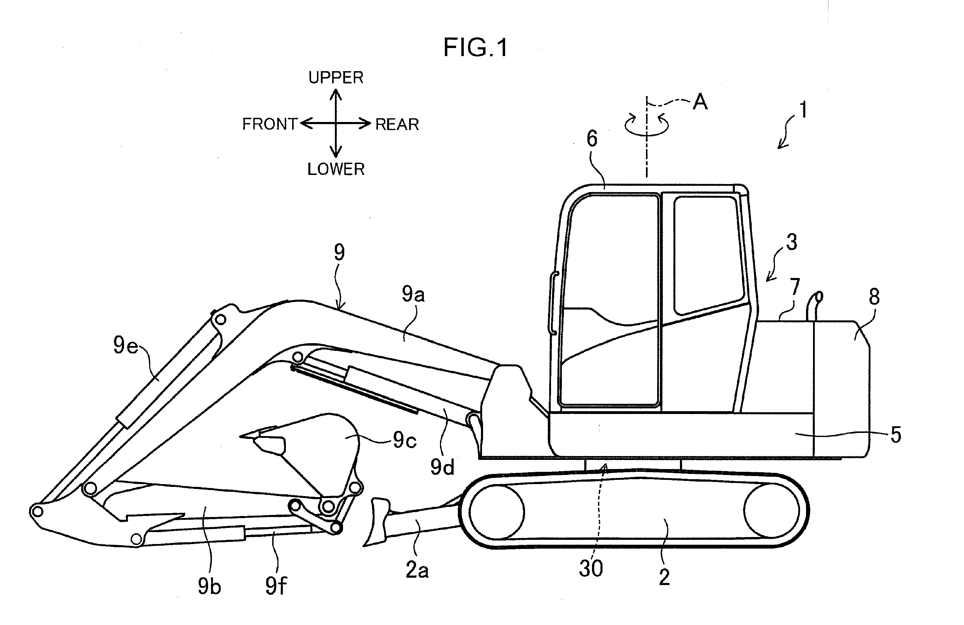

Fig. 1 shows a hydraulic shovel 1 (an example of an operating machine) according to the embodiment of the present invention. The hydraulic shovel 1 has a crawler-type lower propelling body 2 and an upper slewing body 3 provided on the lower propelling body 2 so as to be able to slew around a slewing axis A. The hydraulic shovel 1 according to the present embodiment has a dozer 2a provided in front of the lower propelling body 2 for pushing sediments and the like.

The following description is based on the perspective of an operator sitting in a driver's seat of a cab 6. Each of the drawings shows arrows indicating the front, rear, upper, lower, right, and left.

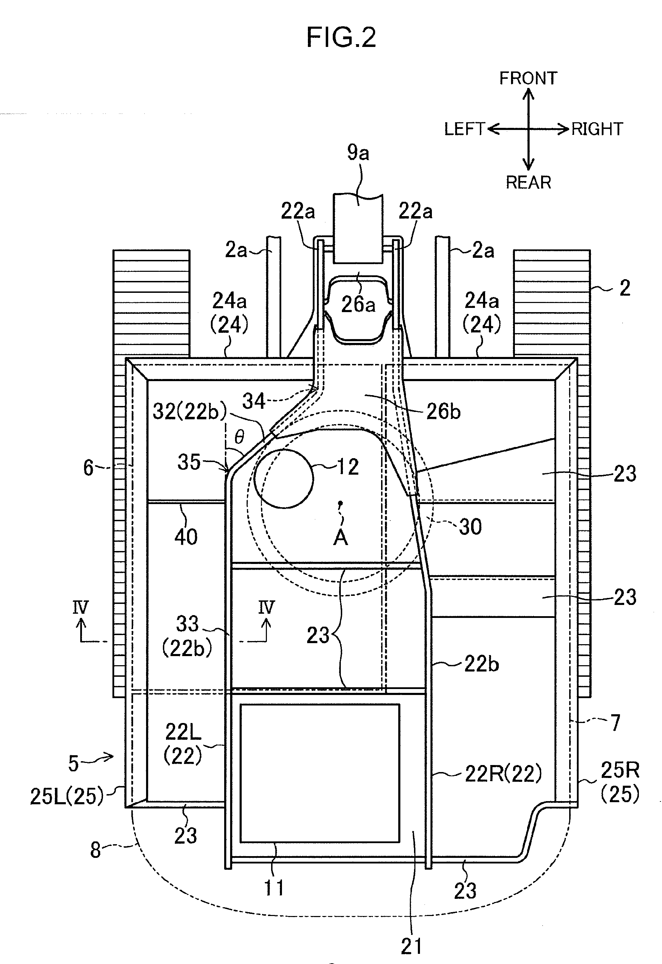

The upper slewing body 3 has an upper frame 5 supported on the lower propelling body 2, and the cab 6, a machinery room 7, a counterweight 8, an attachment 9, an engine 11 (see Fig. 2), and a slewing motor 12 (see Fig. 2) that are provided on the upper frame 5.

The attachment 9 is attached to a front part of the upper frame 5. Specifically, the attachment 9 has a boom 9a having a base end part attached to the upper frame 5 in a manner as to be able to rise and fall, an arm 9b having a base end part attached swingably to a tip end part of the boom 9a, and a bucket 9c attached swingably to a tip end part of the arm 9b. The attachment 9 further has a hydraulic cylinder 9d for causing the boom 9a to rise and fall with respect to the upper frame 5, a hydraulic cylinder 9e for causing the arm 9b to swing with respect to the boom 9a, and a hydraulic cylinder 9f for causing the bucket 9c to swing with respect to the arm 9b. The attachment 9 is displaced when the hydraulic cylinders 9d to 9f are supplied with and discharge pressure oil.

The cab 6 is provided on the left side of the attachment 9 in the front part of the upper frame 5.

The counterweight 8 keeps the balance in a front-back direction by weighing against the load applied to the front part of the upper frame 5 by the attachment 9. Specifically, the counterweight 8 is provided in a rear part of the upper frame 5. The counterweight 8 of the present embodiment also plays the role of a rear part cover in the machinery room 7.

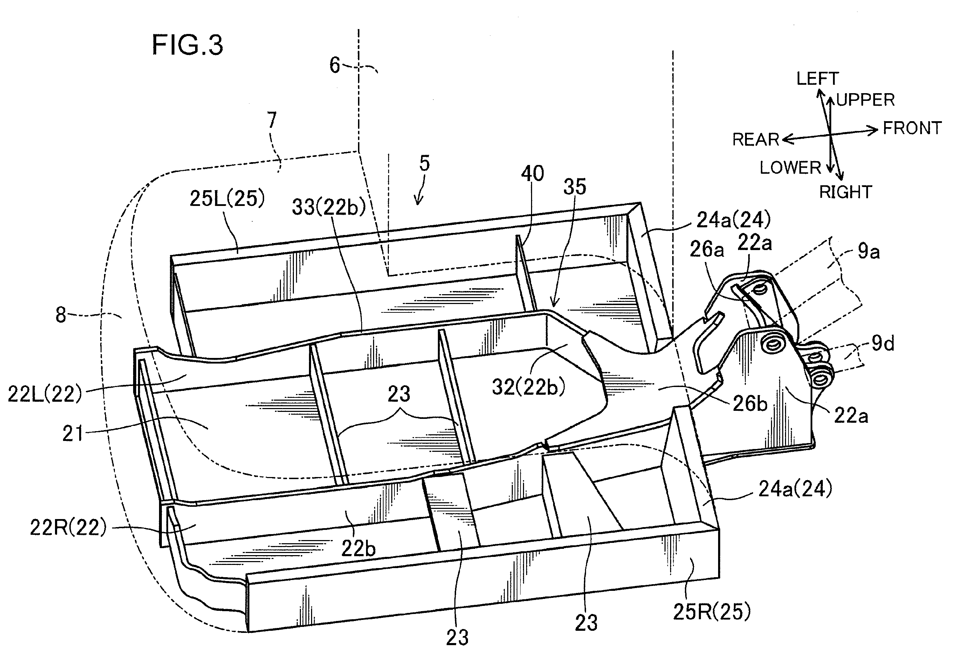

As shown in Figs. 2 and 3, the machinery room 7 is provided over the range from a right front part of the upper frame 5 to the rear part of the same. Various devices and a tank are closely provided in the machinery room 7. For example, the engine 11 is provided in the rear part of the upper frame 5, with its drive shaft disposed along the right-left direction. The slewing motor 12 is provided in the vicinity of the slewing axis A of the upper frame 5.

The upper frame 5 is a support member of structurally improved strength and rigidity. The upper frame 5 has a substantially rectangular shape, when viewed planarly. Specifically, the upper frame 5 includes a bottom plate 21 supported on the lower propelling body 2 so as to be able to slew, a slewing bearing 30 provided on a lower surface of the bottom plate 21, a pair of right and left vertical plates 22 (right vertical plate 22R, left vertical plate 22L) provided to stand on the bottom plate 21 in a manner as to face each other in the right-left direction and extend in the front-back direction, a front frame 24 and a pair of right and left side frames 25 (right side frame 25R, left side frame 25L) that configure parts of a rim of the upper frame 5, a plurality of beams 23 connecting each of the vertical plates 22 and each of the side frames 25 to each other, a reinforcing plate 26 for coupling the vertical plates 22 to each other, and a first coupling member 40 provided between the left vertical plate 22L and the left side frame 25L. Note that each drawing shows a simplified structure of the upper frame 5, for convenience.

The bottom plate 21 configures a bottom surface of the upper frame 5. Specifically, the bottom plate 21 is a metal plate with a relatively large thickness, which is disposed substantially horizontally.

The vertical plates 22 are separated from each other in the right-left direction. In this state a lower end part of each vertical plate 22 is welded to an upper surface of the bottom plate 21. Each of the vertical plates 22 is a metal plate with a relatively large thickness. Support parts 22a for supporting the attachment 9 are provided in front of the slewing bearing 30 in each vertical plate 22, the slewing bearing 30 being described hereinafter. More specifically, the vertical plates 22 have the support parts 22a protruding forward from the front frame 24 and beam parts 22b extending rearward from the support parts 22a.

The support parts 22a are formed to be taller than the beam parts 22b. Specifically, each of the support parts 22a is formed into a trapezoid or triangle, when viewed laterally. The right and left support parts 22a are disposed parallel to each other. The attachment 9 is attached to the support parts 22a and disposed between the support parts 22a. Specifically, the boom 9a and hydraulic cylinder 9d are pivotally supported so as to be able to turn, by two pins inserted into axis holes formed in the support parts 22a respectively.

The beams 22b are formed into band plates of substantially the same height. The planar shapes of the right and left beam parts 22b, on the other hand, vary depending on the arrangement of the equipment including the slewing motor 12 and the engine 11. Specifically, the beam part 22b of the right vertical plate 22R (an example of a second vertical plate) extends almost linearly from a front end to a rear end. More concretely, the beam part 22b of the right vertical plate 22R has a front part extending from the support part 22a to a position behind the front frame 24, an inclined section that is inclined slightly to the right, from the front part to the rear part, and a section that extends rearward from a rear end of this inclined section.

On the other hand, the beam part 22b of the left vertical plate 22 (an example of a first vertical plate) is greatly bent in the right-left direction at two sections in the middle. Specifically, the beam part 22b of the left vertical plate 22L has a front part extending from the support part 22a to a position behind the front frame 24, an inclined part (an example of a curved front part) 32 that extends rearward from a rear end part of the abovementioned front part in a manner that the inclined part becomes distant from the right vertical plate 22R toward the rear direction, and a parallel part (an example of a curved rear part) 33 that extends from the inclined part 32 so as to be substantially parallel (rearward) to the right vertical plate 22R. In other words, a front curved part 34 in front of the inclined part 32 and a rear curved part 35 behind the inclined part 32 are formed in the beam part 22b of the left vertical plate 22L. The rear curved part 35 behind the support part 22a is formed by bending the left vertical plate 22L into a convex shape directed toward an opposite side of the right vertical plate 22R in a planar view. The parallel part 33 extends rearward from the rear curved part 35, and the inclined part 32 extends forward from the rear curved part 35 in a manner that the inclined part 32 comes closer to the right vertical plate 22R toward the front direction.

The front curved part 34 is formed by bending the left vertical plate 22L into a convex shape directed (projecting) to the right. The rear curved part 35, on the other hand, is formed by bending the left vertical plate 22L into a convex shape directed to the left (to the opposite side of the right vertical plate 22R). The inclined part 32 of the left vertical plate 22L is curved at an inclination angle θ with respect to the parallel part 33 in the rear curved part 35. In the present embodiment, the inclination angle θ is set at 20° or greater.

The reinforcing plate 26 is for coupling the vertical plates 22 to each other in order to improve the rigidity of each vertical plate 22. Specifically, the reinforcing plate 26 has a third coupling member 26a coupling inner side surfaces of front end parts of the support parts 22a each other, and a second coupling member 26b coupling the vertical plates 22 each other across the range from rear end parts of the support parts 22a to front end parts of the beam parts 22b. The second coupling member 26b prevents the left vertical plate 22L from being deformed in a direction in which the rear curved part 35 approaches the right vertical plate 22R and a direction in which the rear curved plate 35 separates from the right vertical plate 22R. Specifically, the second coupling member 26b is for coupling the right vertical plate 22R to the inclined part 32 of the left vertical plate 22L and a range in front of the inclined part 32. A lower surface of the second coupling member 26b is welded to upper surfaces of the vertical plates 22. Note that the rear curved part 35 is disposed behind the second coupling member 26b.

The front frame 24 and the right and left side frames 25 each configure a part of a rim part of the upper frame 5. Specifically, the front frame 24 configures a part of a front edge part of the upper frame 5. The side frames 25 configure right and left frames of the upper frame 5 respectively. The frames 24 and 25 are metal processed products.

The front frame 24 has a pair of right and left front frame pieces 24a. The front frame pieces 24a extend from outer side surfaces of the right and left vertical plates 22 (the front end parts of the beam parts 22b) in opposite directions along the right-left direction.

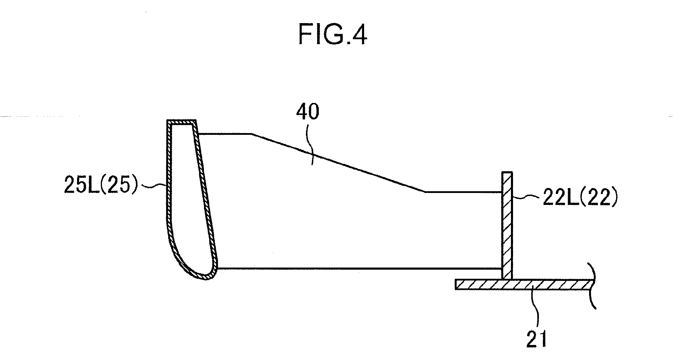

The right and left side frames 25 extend in the front-rear direction so as to be substantially parallel to each other on the outside of the respective vertical plates 22. Moreover, front end parts of the side frames 25 are joined (fixed) to the front frame 24. Specifically, the front end part of the right side frame 25R is joined to a right end part of the front frame piece 24a on the right side. The front end part of the left side frame 25Lis joined to a left end part of the front frame piece 24a on the left side. Rear ends of the side frames 25, on the other hand, are joined (fixed) to the bottom plate 21 via the beams 23. In other words, the side frames 25 are integrated with the bottom plate 21 via the front frame 24 and the beams 23. In addition, the side frames 25 have high rigidity. Specifically, the right and left side frames 25 each have a closed cross section in the shape of an alphabet letter D, as shown in Fig. 4. In other words, each of the side frames 25 is formed by a tubular member that has a circumferential wall provided in a range of the entire circumference around an axis in a longitudinal direction of each side frame. In addition, the front frame 24 and each of the side frames 25 are formed to be taller than the beam parts 22b located within the frames 24, 25. A gap for installing electric wires and hoses etc. can be formed above the beam parts 22b by making the frames 24, 25 taller than the beam parts 22b.

The plurality of beams 23 are members of relatively high rigidity. Each of the beams 23 couples vertical plate 22 and side frame 25 each other in order to structurally reinforce the upper frame 5. Specifically, each of the beams 23, made from a metal plate with a relatively large thickness, couples inner side surfaces of the right and left vertical plates 22 each other. Further, a beam 23 that is formed by bending a metal plate is provided between the right vertical plate 22R and the right side frame 25R so as to couple the right vertical plate 22R and the right side frame 25R each other. As described above, a beam 23, made from a metal plate with a relatively large thickness, is provided between the left vertical plate 22L and the left side frame 25L to couple the left vertical plate 22L and the left side frame 25L. Although not shown, brackets for supporting the various types of equipment on the upper frame 5 are attached directly or indirectly to the beams 23.

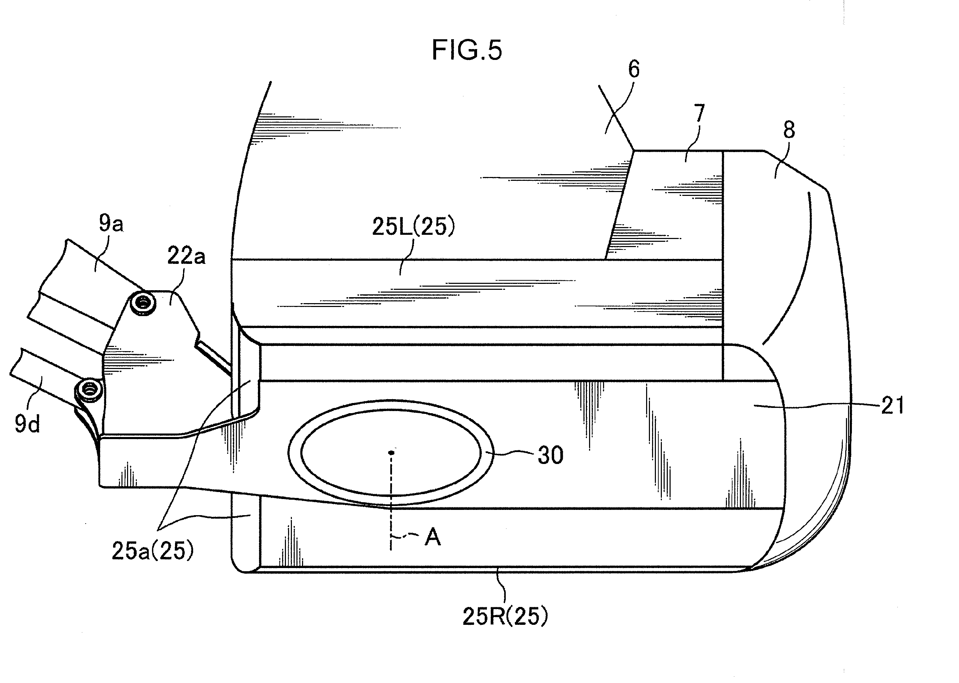

Fig. 5 is a schematic perspective view in which the upper frame 5 is viewed from below.

The slewing bearing 30 is provided for allowing the lower propelling body 2 to support the bottom plate 21, so as to be able to slew around the slewing axis A. Specifically, the slewing bearing 30 is provided in a front part of the lower surface of the bottom plate 21. An inner part of the slewing bearing 30 in the upper frame 5 is supported from underneath by the slewing bearing 30 over the entire circumference around the slewing axis A, and therefore has extremely high rigidity. For this reason, the attachment 9 that is applied with a greatly fluctuating load is generally supported on the inside or in the vicinity of the slewing bearing 30. In this case, the attachment 9 can be steadily supported on the upper frame 5.

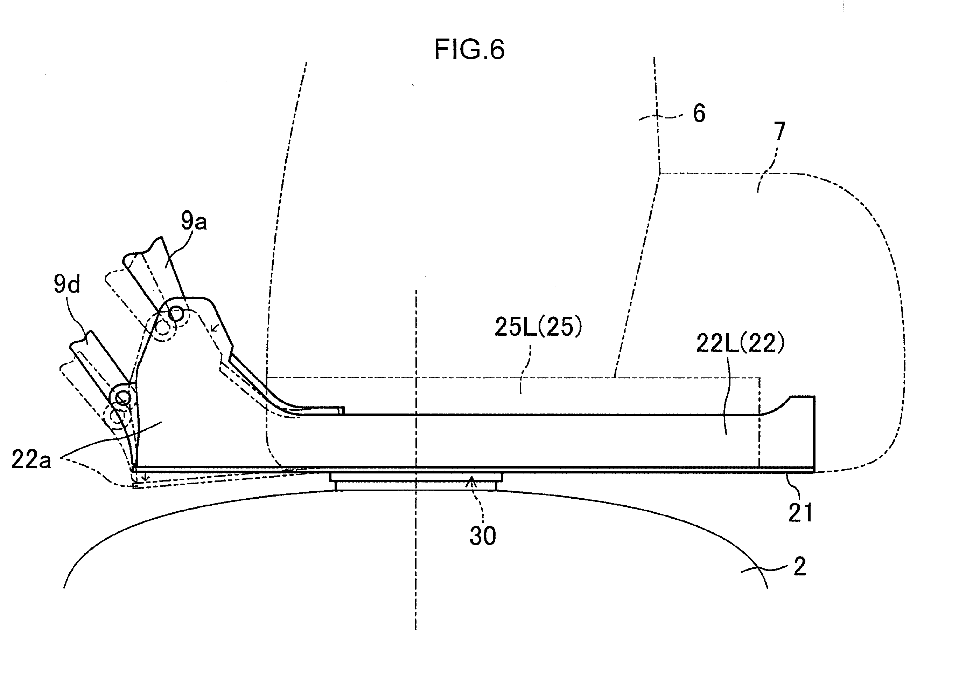

In the hydraulic shovel 1 according to the present embodiment, however, the support parts 22a supporting the attachment 9 are disposed in front of and away from the slewing bearing 30. Thus, there is a possibility that the support parts 22a (the front part of the upper frame 5) swing vertically around the slewing bearing 30 in response to a change in the load applied from the attachment 9, as shown by solid lines and virtual lines in Fig. 6.

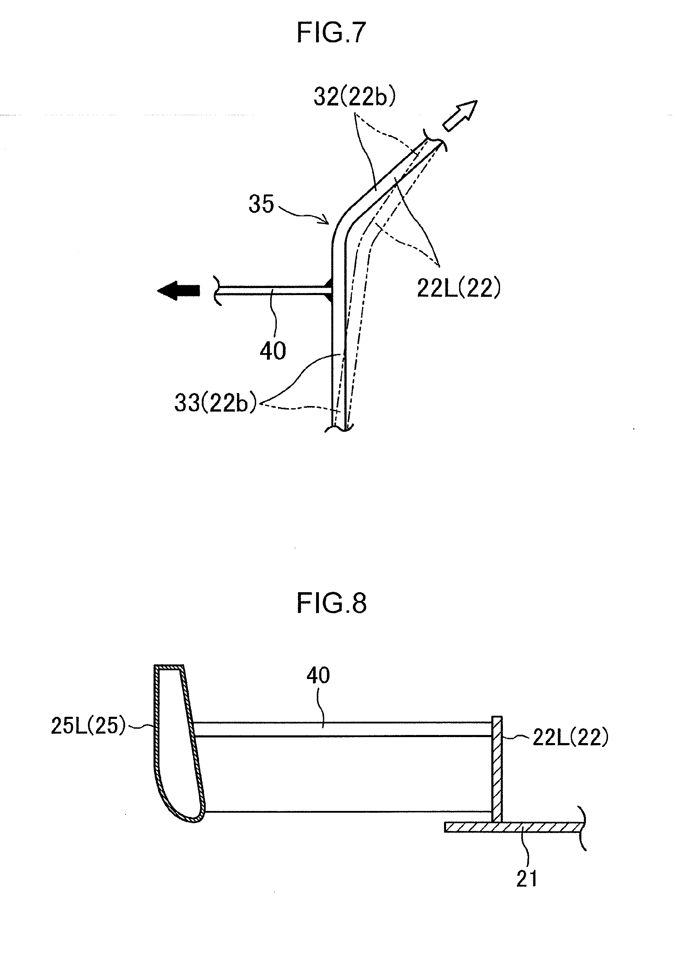

Particularly, in the hydraulic shovel 1 according to the present embodiment, the left vertical plate 22L that functions as a reinforcing member for supporting the attachment 9 is curved significantly in the right-left direction. This might deform an upper part of the left vertical plate 22L such that the curved part 35 expands in the front-back direction (the direction in which the rear curved part 35 approaches the right vertical plate 22R), as shown by virtual lines in Fig. 7. As a result, the support parts 22a swing vertically, more easily.

The hydraulic shovel 1 according to the present invention, therefore, has the first coupling member 40 that is fixed to the left side frame 25L and the left vertical plate 22L and disposed between the left vertical plate 22L and the left side frame 25L. Specifically, the first coupling member 40 couples the left side frame 25L to a section in the left vertical plate 22L that is behind and in the vicinity of the rear curved part 35. In other words, the first coupling member 40 is welded to a front end part of the parallel part 33 of the left vertical plate 22L, so as to be substantially perpendicular to the parallel part 33. A right end part of the first coupling member 40 is butt-welded to a left side surface of the front end part of the parallel part 33 of the left vertical plate 22L. A left end part of the first coupling member 40, on the other hand, is welded to a circumferential wall of the left side frame 25L, so as to be substantially perpendicular to a right side surface of the left side frame 25L. Furthermore, the first coupling member 40 extends along the right-left direction in order to become strong against a tensile force along the right-left direction and is configured by a metal plate that is relatively thin in the front-back direction.

Coupling the left vertical plate 22L and the left side frame 25L to each other by using the first coupling member 40 can prevent the left vertical plate 22L from being deformed in the direction in which the rear curved part 35 approaches the right vertical plate 22R. Specifically, as shown in Fig. 7, the load applied from the attachment 9 acts on the inclined part 22b of the left vertical plate 22L, mainly as a tensile force shown by the white arrow. In the present embodiment, the first coupling member 40 and the left side frame 25L restrict the rightward movement of the left vertical plate 22L. Therefore, a reaction force for canceling out a component along the right-left direction of the tensile force is generated, as shown by the black arrow, in the first coupling member 40 coupling the left side frame 25L and the left vertical plate 22L to each other. Consequently, the first coupling member 40 and the left side frame 25L inhibit the left vertical plate 22L from being deformed. Therefore, the swinging motion of the support parts 22a can be prevented effectively.

On the other hand, when the load applied from the attachment 9 acts on the inclined part 22b as a compression force in a direction opposite to the direction of the white arrow shown in Fig. 7, the first coupling member 40 and the left side frame 25L prevent the left vertical plate 22L from being deformed in the direction in which the rear curved part 35 separates from the right vertical plate 22R. Specifically, in the present embodiment, the first coupling member 40 and the left side frame 25L restrict the leftward movement of the left vertical plate 22L. Therefore, a reaction force for canceling out a component along the fight-left direction of the compression force is generated in the first coupling member 40, in a direction opposite to the direction of the black arrow shown in Fig. 7. Consequently, the first coupling member 40 and the left side frame 25L inhibit the left vertical plate 22L from being deformed.

Note that the first coupling member 40 according to the present embodiment is provided for the purpose of preventing the left vertical plate 22L from being deformed. The first coupling member 40 therefore is strong in the right-left direction and weak in the front-back direction. The first coupling member 40 of such a structure is different from the beams 23 that are required to have a rigidity enhancing function. For this reason, a bracket or the like to which a high load is applied is not joined to the first coupling member 40.

When joining the first coupling member 40 to the inclined part 32 of the left vertical plate 22L, the first coupling member 40 needs to be joined (welded) to an inclined surface. This breaks the joined section easily and pulls the first coupling member 40 before a load acts on the rear curved part 35. Consequently, deformation of the left vertical plate 22L cannot be prevented efficiently.

Furthermore, because the left vertical plate 22L deforms starting from the rear curved part 35, the effect of preventing the left vertical plate 22L from being deformed declines as the joined position between the first coupling member 40 and the left vertical plate 22L separates rearward from the rear curved part 35. It is considered optimal to join the first coupling member 40 to the rear curved part 35, but it is difficult to steadily join the first coupling member 40 to the curved surface of the rear curved part 35 by welding or the like. It is, therefore, preferred that the first coupling member 40 be joined to a position that is slightly behind the rear curved part 35. Thus, the first coupling member 40 according to the present embodiment is joined to the position in the vicinity of the rear curved part 35 (the front end part of the parallel part 33).

As described above, in the present embodiment the support parts 22a for supporting the attachment 9 are provided in front of the slewing bearing 30. The left vertical plate 22L has the rear curved part 35 behind the support parts 22a. Therefore, when the first coupling member 40 according to the present embodiment is not provided, a load from the attachment 9 deforms the left vertical plate 22L in the direction in which the rear curved part 35 approaches the right vertical plate 22R (the direction in which the rear curved part 35 expands) and, at the same time, swings the front part of the upper frame 5 around the slewing bearing 30. Therefore, it is difficult to steadily support the attachment 9. In the present embodiment, however, the first coupling member 40 is provided for coupling the left side frame 25L and the left vertical plate 22L to each other in order to prevent the left vertical plate 22L from being deformed in the direction in which the rear curved part 35 approaches the right vertical plate 22R. Therefore, even when a large load applied from the attachment 9 to the support parts 22a tries to deform the left vertical plate 22L in the direction in which the rear cured part 35 expands, the first coupling member 40 can prevent the left vertical plate 22L from being deformed. Particularly, in the present embodiment, the first coupling member 40 is connected to the left side frame 25L that is provided with high rigidity in order to prevent the upper frame 5 from being deformed when a surrounding object collides with the upper frame 5. Therefore, the load from the upper frame 5 can reliably be received by the left side frame 25L. Then, the front part of the bottom plate 21 can be prevented from swinging vertically around the slewing bearing 30, by preventing the left vertical plate 22L from being deformed. Consequently, the attachment 9 can be supported steadily.

In the present embodiment, the first coupling member 40 is fixed to and disposed between the left vertical plate 22L and the left side frame 25L that is provided at the positions opposite to the right vertical plate 22R with respect to the left vertical plate 22L. As a result, the component along the right-left direction of the load transmitted from the attachment 9 to the left vertical plate 22L can reliably be transmitted to the left side frame 25L and the bottom plate 21 to which the left side frame 25L is fixed, via the first coupling member 40. Consequently, the left vertical plate 22L can be prevented from being deformed, not only in the direction in which the rear curved part 35 approaches the right vertical plate 22R but also in the direction in which rear curved part 35 separates from the right vertical plate 22R. Thus, according to the present embodiment, the attachment 9 can be supported more steadily.

According to the present embodiment, the left vertical plate 22L can effectively be prevented from being deformed by the load from the attachment 9. More specifically, the load applied from the attachment 9 to the support part 22a of the left vertical plate 22L acts mainly as a tensile force on the inclined part 32 of the left vertical plate 22L. This tensile force is directed obliquely forward along the inclined part 32. Because the component along the right-left direction of this tensile force moves the rear curved part 35 toward the right vertical plate 22R, this component along the right-left direction needs to be received by the left side frame 25L.

In the present embodiment, the first coupling member 40 is welded to the parallel part 33 of the left vertical plate 22L, so as to be substantially perpendicular to the parallel part 33. Accordingly, the first coupling member 40 can be welded to the side surface of the left vertical plate 22L (the parallel part 33) that extends perpendicular to the component along the right-left direction of the tensile force. Thus, compared to when welding the first coupling member 40 to the side surface of the inclined part 32 that is inclined with respect to the front-back direction, the welding strength with respect to the component along the right-left direction of the tensile force can be improved. Furthermore, in the present embodiment, the first coupling member 40 is welded to the front end part of the parallel part 33. Because the movement of the left vertical plate 22L can be restricted in the position closest to the rear curved part 35, the left vertical plate 22L can effectively be prevented from being deformed.

Furthermore, in the present embodiment, the first coupling member 40 is fixed to the parallel part 33 of the left vertical plate 22L, so as to be substantially perpendicular to the parallel part 33, in other words, so as to be along the right-left direction. Accordingly, the component along the right-left direction of the tensile force can be firmly received by the entirety of the first coupling member 40. Therefore, the first coupling member 40 can be made up by a simple member able to resist against the tensile force along the right-left direction. Specifically, the first coupling member 40 can be made up by a plate member whose thickness is arranged in the front-rear direction.

Note that even when the load applied from the attachment 9 to the left vertical plate 22L acts as a compression force onto the inclined part 32 of the left vertical plate 22L (a force directed obliquely rearward), the same effects can be realized.

The present embodiment further has the second coupling member 26b for coupling the inclined part 32 of the left vertical plate 22L and the right vertical plate 22R to each other. Therefore, while the first coupling member 40 holds the position of the parallel part 33 in the left vertical plate 22L, the second coupling member 26b holds the position of the inclined part 32 in the left vertical plate 22L. In this manner, the left vertical plate 22L can effectively be prevented from being deformed.

In the present embodiment, the left side frame 25L is formed from a tubular member. Thus, bending strength of the left side frame 25L can be improved. Therefore, the load from the attachment 9 can reliably be received by the left side frame 25L.

In the present embodiment as shown in FIG. 4, the section in the left side frame 25L to which the first coupling member 40 is connected has a greater height than the section in the left vertical plate 22L to which the first coupling member 40 is connected. Thus, compared to when the left side frame 25L has a smaller height than the left vertical plate 22L, the bending strength of the left side frame 25L can be improved. Consequently, the load from the attachment 9 can reliably be received by the left side frame 25L.

The operating machine according to the present invention comprises not only the embodiment described above but also various other configurations.

The embodiment described above employs the plate-like first coupling member 40, but a first coupling member 40 of a rod shape for coupling the upper part of the left vertical plate 22L and the left side frame 25L to each other as shown in Fig. 8, may be employed. In other words, it is sufficient that the first coupling member 40 be joined (welded) to at least the upper part of the left vertical plate 22L. Thereby, the left vertical plate 22L can be prevented from being deformed. Specifically, because a lower part of the left vertical plate 22L is fixed to the bottom plate 21, mainly the upper part of the left vertical plate 22L becomes deformed. The left vertical plate 22L can be prevented from being deformed, by coupling at least the upper part of the left vertical plate 22L and the left side frame 25L to each other by means of the first coupling member 40, as shown in Fig. 8.

Moreover, the cross-sectional shape of the first coupling member 40 also can be selected appropriately from various shapes such as a circular shape, a rectangular shape, and the like. In other words, the cross-sectional shape of the first coupling member 40 can be selected from cross-sectional shapes having tensile force capable of preventing the left vertical plate 22L from being deformed.

The first coupling member 40 may have rigidity enough to be able to function as a beam. For instance, the cross section of the first coupling member 40 can be formed into an L shape or U shape.

The first coupling member 40 according to the present embodiment is fixed in a manner as to be substantially perpendicular to the left side frame 25L and the parallel part 33 of the left vertical plate 22L. However, the first coupling member 40 may be fixed in a manner as to be inclined with respect to the left side frame 25L and the left vertical plate 22L. For example, the first coupling member 40 may be fixed to the left side frame 25L and the left vertical plate 22L so as to extend substantially parallel to the inclined part 32.

Additionally, the configurations of the vertical plates 22 may be reversed right and left. A curved part may be formed, not only on the left vertical plate 22L but also on the right vertical plate 22R. When curved parts are formed in both of the vertical plates 22, the first coupling member 40 can be provided between the right vertical plate 22R and the right side frame 25R as well.

The operating machine according to the present embodiment is not limited to the hydraulic shovel 1 shown in Fig. 1. The configuration described above can be adopted to a so-called swing type hydraulic shovel in which the attachment 9 is supported so as to be able to swing in the right-left direction with respect to the support parts 22a.

Inventions with the following configurations are mainly included in the specific embodiment described above.

In other words, the present invention provides an upper slewing body that is provided on a lower propelling body of an operating machine so as to be able to slew, the upper slewing body comprising: an upper frame that has a bottom plate that is supported on the lower propelling body via a slewing bearing so as to be able to slew, first and second vertical plates that are provided to stand on the bottom plate so as to face each other in a right-left direction and to extend in a front-back direction, and a side frame fixed to the bottom plate and configuring a part of a rim part of the upper frame, the vertical plates each having a support part located in front of the slewing bearing; and an attachment that is supported on the support parts of the vertical plates so as to be able to rise and fall, wherein the first vertical plate has a curved part, behind the support part, which is curved to form a convex shape directed toward an opposite side of the second vertical plate in a planar view, and the upper slewing body further comprises a first coupling member for coupling the side frame and the first vertical plate to each other so as to prevent the first vertical plate from being deformed in a direction in which the curved part approaches the second vertical plate.

According to the present invention, the first vertical plate has the curved part that is curved into a convex shape directed toward the opposite side of the second vertical plate in the rear of the support part. The upper slewing body according to the present invention has the first coupling member that couples the side frame and the first vertical plate to each other so as to prevent the first vertical plate from being deformed in a direction in which the curved part approaches the second vertical plate in a planar view.

In the upper slewing body according to the present invention, the support part supporting the attachment is provided in front of the slewing bearing. Further, the first vertical plate has a curved part behind the support part. Therefore, when the first coupling member according to the present invention is not provided, a load from the attachment deforms the first vertical plate in the direction in which the curved part approaches the second vertical plate (the direction in which the curved part expands) and, at the same time, swings vertically the front part of the upper frame around the slewing bearing. Therefore, it is difficult to steadily support the attachment. In the present invention, however, the first coupling member is provided for coupling the side frame and the first vertical plate to each other in order to prevent the first vertical plate from being deformed in the direction in which the curved part approaches the second vertical plate. Therefore, even when the application of a large load from the attachment to the support part tries to deform the first vertical plate in the direction in which the cured part expands, the first coupling member can prevent the first vertical plate from being deformed. Particularly, in the present invention, the first coupling member is connected to the side frame that is provided with high rigidity in order to prevent the upper frame from being deformed when a surrounding object collides with the upper frame. Therefore, the load from the upper frame can reliably be received by the side frame. Then, the front part of the bottom plate can be prevented from swinging vertically around the slewing bearing, by preventing the first vertical plate from being deformed. Consequently, the attachment can be supported steadily.

It is preferred that, in the upper slewing body, the side frame be provided at a position opposite to the second vertical plate with respect to the first vertical plate, and that the first coupling member be fixed to and disposed between the side frame and the first vertical plate.

In this aspect, the first coupling member is fixed to and disposed between the first vertical and the side frame plate that is provided at the positions opposite to the second vertical plate with respect to the first vertical plate. In this manner, the component along right-left direction of the load transmitted from the attachment to the first vertical plate can reliably be transmitted to the side frame and the bottom plate to which the side frame is fixed, via the first coupling member. Consequently, the first vertical plate can be prevented from being deformed, not only in the direction in which the curved part approaches the second vertical plate but also in the direction in which curved part separates from the second vertical plate. Thus, according to this aspect, the attachment can be supported more steadily.

It is preferred that, in the upper slewing body, the first vertical plate include a curved rear part extending rearward from the curved part and a curved front part extending forward from the curved part in a manner that the curved front part comes closer to the second vertical plate toward the front direction, and that the first coupling member be welded to a front end part of the curved rear part so as to be substantially perpendicular to the curved rear part of the first vertical plate.

According to this aspect, the first vertical plate can effectively be prevented from being deformed by the load from the attachment. More specifically, the load applied from the attachment to the support part of the first vertical plate acts mainly as a tensile force onto the curved front part of the first vertical plate. This tensile force is directed obliquely forward along the curved front part. Because the component of this tensile force along right-left direction moves the curved part toward the second vertical plate, this component along right-left direction needs to be received by the side frame.

In this aspect, the first coupling member is welded to the curved rear part of the first vertical plate so as to be substantially perpendicular to the curved rear part. Accordingly, the first coupling member can be welded to the side surface of the first vertical plate (the curved rear part) that extends perpendicular to the component of the tensile force along right-left direction. Thus, compared to when welding the first coupling member to the side surface of the curved front part that is inclined with respect to the front-back direction, the welding strength with respect to the component of the tensile force along right-left direction can be improved. Furthermore, in this aspect, the first coupling member is welded to the front end part of the curved rear part. Because the movement of the first vertical plate can be restricted in the position closest to the curved part, the first vertical plate can effectively be prevented from being deformed.

Furthermore, in this aspect, the first coupling member is welded to the curved rear part of the first vertical plate so as to be substantially perpendicular to the curved rear part, in other words, so as to be along the right-left direction. Accordingly, the right-left component of the tensile force can be firmly received by the entirety of the first coupling member. Therefore, the first coupling member can be made up by a simple member able to resist against the tensile force along right-left direction. For example, the first coupling member can be made up by a plate member whose thickness is arranged in the front-back direction.

Note that even when the load applied from the attachment to the first vertical plate acts as a compression force onto the curved front part of the first vertical plate (a force directed obliquely rearward), the same effects can be realized.

It is preferred that the upper slewing body further have a second coupling member for coupling the curved front part of the first vertical plate and the second vertical plate to each other so as to prevent the first vertical plate from being deformed in a direction in which the curved part approaches the second vertical plate and a direction in which the curved part separates from the second vertical plate.

In this aspect the upper slewing body further has the second coupling member for coupling the curved front part of the first vertical plate and the second vertical plate to each other. Therefore, while the first coupling member holds the position of the curved rear part of the first vertical plate, the second coupling member can hold the position of the curved front part of the first vertical plate. In this manner, the first vertical plate can effectively be prevented from being deformed.

It is preferred that, in the upper slewing body, the side frame be formed from a tubular member that has a circumferential wall provided in a range of the entire circumference around an axis along a longitudinal direction of the side frame, and that the first coupling member be fixed to the circumferential wall of the side frame.

In this aspect, the side frame is formed from a tubular member. Thus, bending strength of the side frame can be improved. Therefore, the load from the attachment can reliably be received by the side frame.

It is preferred that, in the upper slewing body, the section in the side frame to which the first coupling member is connected have a greater height than the section in the first vertical plate to which the first coupling member is connected.

In this aspect, the side frame has a greater height than the first vertical plate. Thus, compared to when the side frame has a smaller height than the first vertical plate, the bending strength of the side frame can be improved. Consequently, the load from the attachment can reliably be received by the side frame.

In the upper slewing body, it is sufficient that the first coupling member be fixed to at least an upper part of the first vertical plate.

According to this aspect, the first vertical plate can be prevented from being deformed. Specifically, because a lower part of the first vertical plate is fixed to the bottom plate, mainly the upper part of the first vertical plate becomes deformed. Therefore, the first vertical plate can be prevented from being deformed, by coupling at least the upper part of the first vertical plate and the side frame to each other by means of the first coupling member.

The present invention also provides an operating machine that has the upper slewing body described above and a lower propelling body that supports the upper slewing body via the slewing bearing so as to allow the upper slewing body to slew.

This application is based on Japanese Patent application No. 2011-227224 filed in Japan Patent Office on October 14, 2011, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

An upper frame has a bottom plate, a pair of vertical plates that are provided to stand on the bottom plate so as to face each other in a right-left direction, and a left side frame configuring a part of a rim part of the upper frame. An attachment is supported on a support parts provided in front of the slewing bearing in vertical plates. A left vertical plate has a rear curved part, behind the support part, which is curved forming a convex shape directed toward an opposite side of a right vertical plate in a planar view. The upper slewing body further has a first coupling member for coupling the left side frame and the left vertical plate to each other so as to prevent the left vertical plate from being deformed in a direction in which the rear curved part approaches the right vertical plate.

## Claims

1. An upper slewing body that is provided on a lower propelling body of an operating machine so as to be able to slew,
the upper slewing body comprising:
an upper frame that has a bottom plate that is supported on the lower propelling body via a slewing bearing so as to be able to slew, first and second vertical plates that are provided to stand on the bottom plate so as to face each other in a right-left direction and to extend in a front-back direction, and a side frame fixed to the bottom plate and configuring a part of a rim part of the upper frame, the vertical plates each having a support part located in front of the slewing bearing; and
an attachment that is supported on the support parts of the vertical plates so as to be able to rise and fall,
wherein the first vertical plate has a curved part, behind the support part, which is curved to form a convex shape directed toward an opposite side of the second vertical plate in a planar view, and
the upper slewing body further comprises a first coupling member for coupling the side frame and the first vertical plate to each other so as to prevent the first vertical plate from being deformed in a direction in which the curved part approaches the second vertical plate.

2. The upper slewing body according to claim 1, wherein
the side frame is provided at a position opposite to the second vertical plate with respect to the first vertical plate, and
the first coupling member is fixed to and disposed between the side frame and the first vertical plate.

3. The upper slewing body according to claim 2, wherein
the first vertical plate includes a curved rear part extending rearward from the curved part and a curved front part extending forward from the curved part in a manner that the curved front part comes closer to the second vertical plate toward the front direction, and
the first coupling member is welded to a front end part of the curved rear part so as to be substantially perpendicular to the curved rear part of the first vertical plate.

4. The upper slewing body according to claim 3, further comprising a second coupling member for coupling the curved front part of the first vertical plate and the second vertical plate to each other so as to prevent the first vertical plate from being deformed in a direction in which the curved part approaches the second vertical plate and a direction in which the curved part separates from the second vertical plate.

5. The upper slewing body according to any one of claims 1 to 4, wherein
the side frame is formed from a tubular member that has a circumferential wall provided in a range of the entire circumference around an axis along a longitudinal direction of the side frame, and
the first coupling member is fixed to the circumferential wall of the side frame.

6. The upper slewing body according to any one of claims 1 to 5, wherein
a section in the side frame to which the first coupling member is connected has a greater height than a section in the first vertical plate to which the first coupling member is connected.

7. The upper slewing body according to any one of claims 1 to 6, wherein
the first coupling member is fixed to at least an upper part of the first vertical plate.

8. An operating machine that has:
the upper slewing body according to any one of claims 1 to 7, and
a lower propelling body that supports the upper slewing body via the slewing bearing so as to allow the upper slewing body to slew.
